Europäisches Patentamt

**European Patent Office**

Office européen des brevets

(19)

(11) Veröffentlichungsnummer: **0 155 998**
**A1**

(12) # EUROPÄISCHE PATENTANMELDUNG

(21) Anmeldenummer: **84113767.2**

(22) Anmeldetag: **14.11.84**

(51) Int. Cl.⁴: **G 03 B 21/32**

(30) Priorität: **19.03.84 CH 1375/84**

(43) Veröffentlichungstag der Anmeldung:
**02.10.85 Patentblatt 85/40**

(84) Benannte Vertragsstaaten:
**AT BE DE FR GB IT LU NL SE**

(71) Anmelder: **C.E.T. Construction Engineering and Technology Limited**
**One Dunraven Street**
**London, W1Y 3FG(GB)**

(72) Erfinder: **Kuoni, Xaver**
**Aargauer Strasse 251**
**CH-8048 Zürich(CH)**

(74) Vertreter: **Baumann, Eduard, Dipl.-Phys.**
**Postfach 1201 Sattlerstrasse 1**
**D-8011 Höhenkirchen/München(DE)**

(54) **Einrichtung für die Endlosprojektion eines kinematograpischen Filmes.**

(57) Diese Einrichtung weist einen horizontalen, drehbaren Teller (24) und eine in Mittelteil desselben angeordnete Wickeltrommel (34) auf. Ein endlos zu projizierender Film (22) wird um die Wickeltrommel (34) gewunden. Ein Ringkörper (61) der Wickeltrommel (34) weist aussen zahlreiche drehbare Stützrollen (64) mit vertikalen Achsen (65) auf, zum radialen Abstützen der innersten Windung des Filmwickels. An der Oberseite des Tellers (24) sind zum achsialen Abstützen des Filmwickels zahlreiche drehbare Stützwalzen (40, 41) mit radial zum Teller (24) verlaufenden Achsen angeordnet. Die achsiale Länge jeder Stützwalze (40, 41) beträgt nur einen Bruchteil der radialen Abmessung des Tellers (24). Der Ringkörper (61) der Wickeltrommel (34) ist mit einer Unterbrechung (120) versehen, durch welche hindurch die innerste Windung des Filmwickels abziehbar ist. Im Innenraum der Wickeltrommel (34) sind Führungs- und Umlenkrollen (122–126, 140) sowie eine motorisch antreibbare Transportrolle (131) für den Filmstreifen angeordnet, der innen vom Filmwickel abgezogen und dem Projektor zugeleitet wird. Der vom Projektor zurückkommende Film wird aussen auf den Filmwickel aufgewickelt. Der Teller (24) ist motorisch antreibbar, um die Drehung des Filmwickels zu begünstigen.

EP 0 155 998 A1

./...

Fig. 2

## Einrichtung für die Endlosprojektion eines kinematographischen Filmes

Die vorliegende Erfindung betrifft eine Einrichtung für die Endlosprojektion eines kinematographischen Filmes, mit einem drehbar gelagerten Teller zum achsialen Abstützen eines spiralartigen Filmwickels, mit einer zum Teller koaxialen Wickeltrommel mit einem Ringkörper zum radialen Abstützen der innersten Windung des Filmwickels, mit ersten Führungsrollen zum fortlaufenden Abführen des Filmes von der innersten Windung des Filmwickels zwecks Zulieferung des Filmes zu einem Filmprojektor und mit weiteren Führungsrollen zum Zuleiten des vom Filmprojektor zurückkommenden Filmes zur äussersten Windung des Filmwickels.

Kinematographische Filme haben üblicherweise ein vorderes oder voranlaufendes Ende und ein hinteres oder nachlaufendes Ende. Im allgemeinen wird ein derartiger Film in Form eines spiralartigen Filmwickels gehandhabt, der sich auf einem Wickelkern oder einer Wickeltrommel befindet, wobei das eine Ende des Filmstreifens am Wickelkern oder an der Wickeltrommel lösbar befestigt ist. Gemäss einem weit verbreiteten Verfahren wird während der Projektion des Filmes der Filmstreifen vom Aussenumfang des Filmwickels abgezogen, durch den Filmprojektor geführt und nachher auf einem zweiten Wickelkern oder einer zweiten Wickeltrommel wieder aufgewickelt. Dabei kommt das voranlaufende Ende des Filmstreifens an den Innenumfang des entstehenden zweiten Filmwickels zu liegen. Für eine erneute Vorführung des Filmes muss der Filmstreifen zurückgespult werden.

Um die Notwendigkeit des Zurückspulens des Filmstreifens zu vermeiden, hat man bereits Wickeleinrichtungen geschaffen, bei denen der Filmstreifen während der Projektion vom Innenumfang eines Filmwickels abgenommen wird, wobei nach dem Durchlaufen des Projektors der Filmstreifen wieder zu einem Filmwickel aufgewickelt wird, an welchem das voranlaufende Ende des Filmstreifens ebenfalls innen liegt. Der so entstandene zweite Filmwickel ist dann sofort für eine erneute Filmprojektion bereit, bei welcher der Filmstreifen wiederum vom Innenumfang des Filmwickels abgenommen wird. Wenngleich in diesem Fall ein Zurückspulen des Filmstreifens nach jeder Vorführung entfällt, muss das voranlaufende Ende des Filmstreifens für jede weitere Vorführung erneut in den Projektor eingefädelt und an einem zweiten Wickelkern oder einer zweiten Wickeltrommel befestigt werden. Eine Endlosprojektion ist demgemäss nicht ermöglicht.

Es ist aber auch bekannt, das nachlaufende Ende eines Filmstreifens mit dem voranlaufenden Ende desselben zu verbinden, so dass ein endloser Streifen entsteht, der ohne Unterbrechung wiederholt vorgeführt werden kann. In der Praxis stellt dieses Verfahren erhebliche Probleme, sobald die Länge des Filmstreifens ein gewisses Mass übersteigt. Bei bekannten Einrichtungen zur sogenannten Endlosprojektion wird ein Teil des Filmstreifens mäanderartig über zahlreiche Umlenkrollen geführt. Für Schmalfilme sind auch Einrichtungen der eingangs erwähnten Art bekannt, bei denen also der Filmstreifen fortlaufend vom Innenumfang eines spiralartigen Filmwickels abgenommen und nach dem Durchlaufen des Projektors am Aussenumfang des gleichen Filmwickels wieder aufgewunden wird. Es leuchtet ein, dass bei diesem Vorgehen die einander benachbarten Windungen des Filmwickels unterschiedliche Umfangsgeschwindigkeiten aufweisen und somit aneinander gleiten, wenn die Innen- und Aussendurchmesser des Filmwickels konstant gehalten werden. Die damit verbundenen technischen Schwierigkeiten sind umso grösser, je grösser das Bildformat, die Länge und das Gewicht des Filmstreifens sind. Die erwähnten Schwierigkeiten ergeben sich insbesondere im Hinblick auf eine möglichst gute Filmschonung, d.h. auf die Vermeidung von Kratzern und Schrammen am Filmstreifen infolge des Aneinandergleitens der Filmwindungen und auf die Verhütung von Perforationsschäden infolge übermässig hoher Zugkräfte für den kontinuierlichen Vorschub des Filmstreifens.

Angesichts der geschilderten technischen Schwierigkeiten
ist es nicht verwunderlich, dass bisher auf dem Markt keine
befriedigenden Einrichtungen zur Endlosprojektion von längeren Kinofilmen mit 35 mm oder grösserer Breite erschienen
sind. Ein 35 mm breiter Kinofilm mit einer Vorführdauer von
90 Minuten hat eine Länge von rund 2'500 m und ein Gewicht
von etwa 17 kg. Es ist nun die Aufgabe der Erfindung, eine
Endlosprojektions-Einrichtung der eingangs genannten Art so
auszugestalten, dass eine bisher unerreicht gute Filmschonung gewährleistet ist und daher auch Ausführungsarten für
Kinofilme mit 35 mm und grösserer Breite und mit einer Vorführdauer von mehr als 1 Stunde ermöglicht sind.

Diese Aufgabe ist durch die im kennzeichnenden Teil des Anspruchs 1 definierten Merkmale gelöst worden.

Vorteilhafte Weiterbildungen sind in den abhängigen Ansprüchen definiert.

Einzelheiten und Vorteile sind der nun folgenden Beschreibung und den zugehörigen Zeichnungen zu entnehmen, in denen
eine bevorzugte Ausführungsform des Erfindungsgegenstandes
rein beispielsweise beschrieben bzw. veranschaulicht ist.

Fig. 1   zeigt schematisch eine Seitenansicht eines kinematographischen Projektors und einer erfindungsgemäss
ausgestalteten Einrichtung für die Endlosprojektion
von Kinofilmen;

Fig. 2   zeigt in grösserer Darstellung eine Draufsicht auf
einen Teil der Einrichtung;

Fig. 3 ist ein vertikaler Schnitt nach der Linie 3-3 in

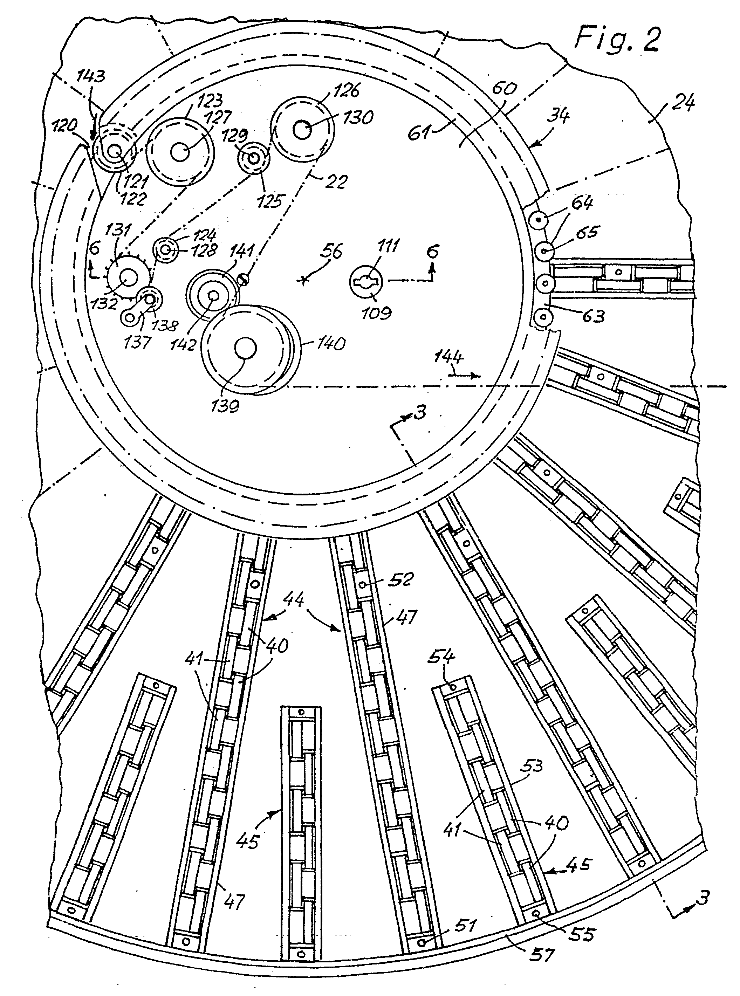

Fig. 2, in noch grösserer Darstellung;

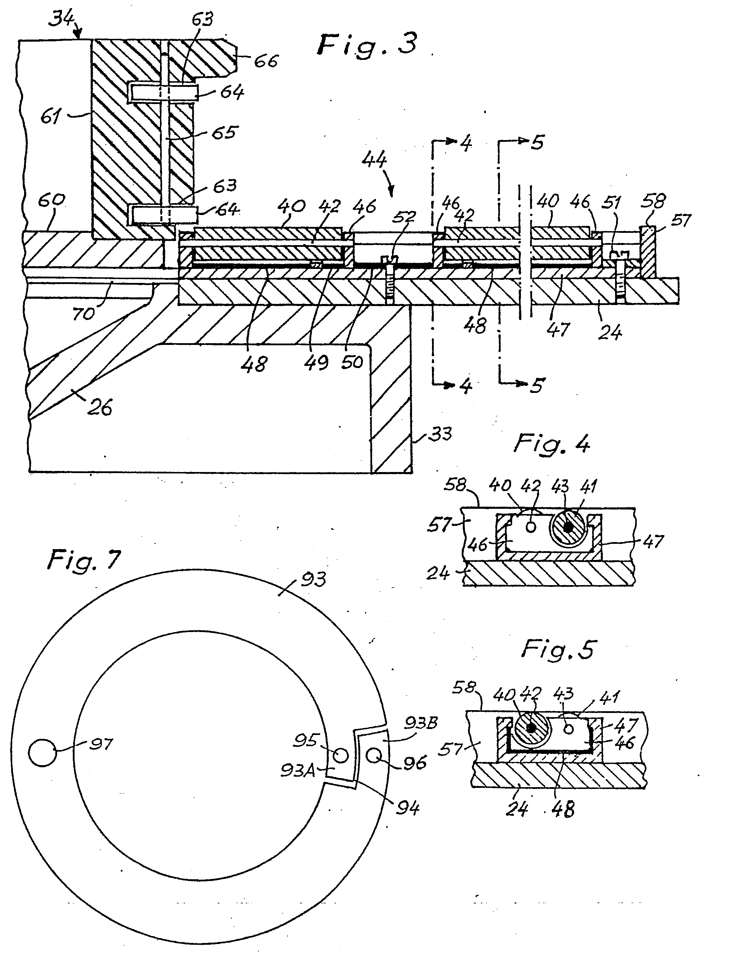

Fig. 4 zeigt einen Querschnitt nach der Linie 4-4 in Fig.3;

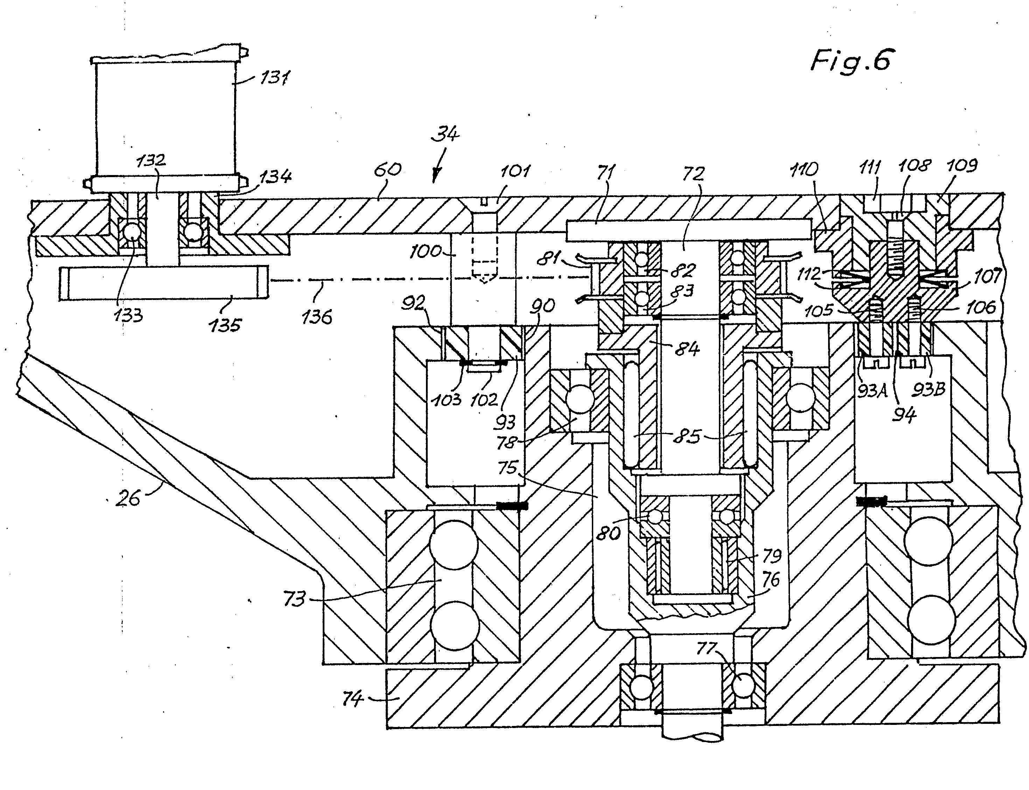

Fig. 5 ist ein analoger Querschnitt nach der Linie 5-5
in Fig. 3;

Fig. 6 ist ein vertikaler Schnitt nach der Linie 6-6 in
Fig. 2 in grösserer Darstellung;

Fig. 7 zeigt eine Draufsicht auf einen in seinem Durchmesser veränderbaren Kupplungsring, der ein Bauteil der
in Fig. 6 dargestellten Partie der Einrichtung ist;

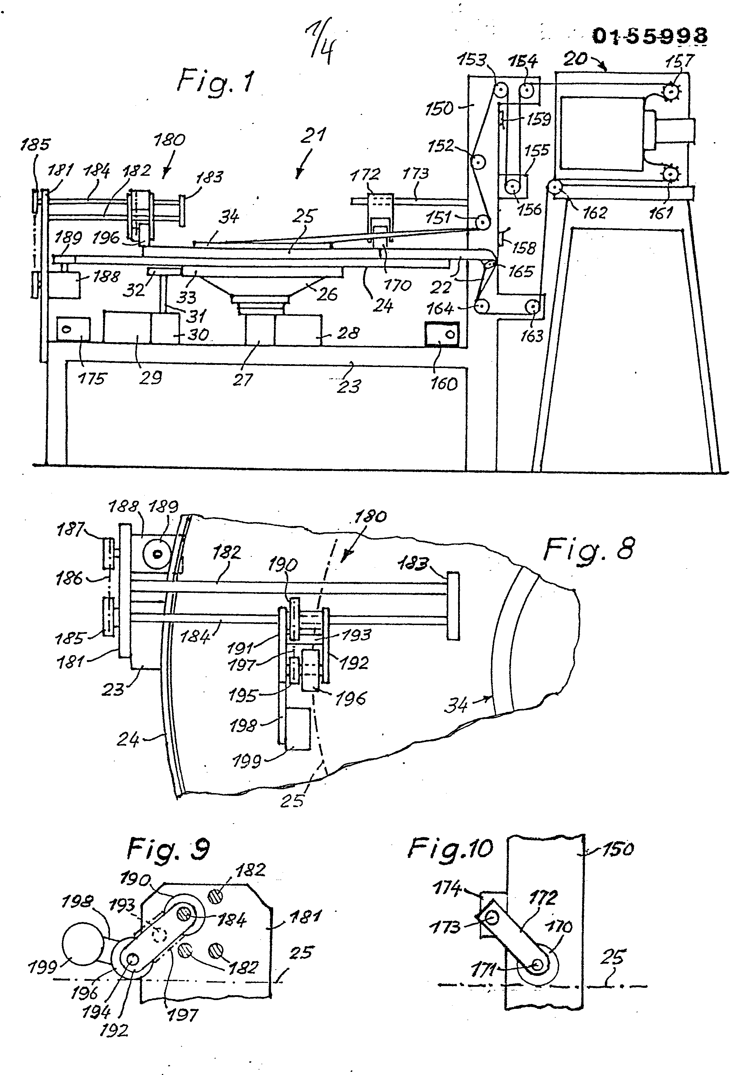

Fig. 8 ist eine Draufsicht auf einen Teil der Einrichtung
gemäss Fig. 1, in grösserer Darstellung;

Fig. 9 stellt einen Querschnitt nach der Linie 9-9 in Fig. 8
dar;

Fig. 10 zeigt einen anderen Teil der Einrichtung gemäss Fig.1
in Seitenansicht und in grösserer Darstellung.

In Fig. 1 erkennt man einen kinematographischen Filmprojektor 20 und eine Einrichtung 21, welche die Endlosprojektion
eines Kinofilmes 22 ermöglicht und nachstehend näher erläutert wird. Die Einrichtung 21 weist einen stationären Ständer 23 auf, der einen horizontalen, kreisförmigen Teller 24
zum Abstützen eines spiralartigen Filmwickels 25 trägt. Der
Teller 24 liegt auf einer Nabe 26, die auf später noch zu beschreibende Weise drehbar gelagert und auf einem Getriebegehäuse 27 abgestützt ist, das seinerseits auf dem Ständer 23
ruht. Mit dem Getriebegehäuse 27, welches ein Winkelgetriebe
enthält, ist ein elektrischer Antriebsmotor 28 verbunden.
Letzterer dient jedoch nicht zum Drehantrieb des Tellers 24, sondern zum Antrieb einer zum Teller koaxialen Welle, die
im Innern der Nabe 26 angeordnet ist und später beschrieben
werden wird. Für den Antrieb des Tellers 24 ist auf dem
Ständer 23 ein zweiter elektrischer Antriebsmotor 29 befestigt, der über ein zugehöriges Winkelgetriebe 30 mit einer Welle 31 in Verbindung steht. Letztere trägt ein Reibrad 32, das gegen einen zylindrischen Umfangsrand 33 der Nabe 26 anliegt, um die Nabe und damit auch den Teller 24 in
Drehung zu versetzen, wenn der Motor 29 in Betrieb ist. Auf
der Oberseite des Tellers 24 ist eine Wickeltrommel 34 koaxial angeordnet, an deren Aussenumfang die innerste Windung des Filmwickels 25 radial abgestützt ist. Einzelheiten
hierzu sind weiter unten beschrieben.

Zum reibungsarmen achsialen Abstützen des Filmwickels 25 auf
dem Teller 24 ist letzterer an seiner Oberseite mit einer
Mehrzahl von individuell drehbaren Stützwalzen 40 und 41 versehen, wie in den Fig. 2 bis 5 zu sehen ist. Die Stützwalzen
40 und 41 weisen je eine zylindrische Umfangsfläche auf und
sind je auf einer Achse 42 bzw. 43 (Fig. 3 bis 5) gelagert,
die radial zum Teller 24 angeordnet ist. Die achsiale Länge
jeder einzelnen Stützwalze 40 bzw. 41 beträgt nur einen
Bruchteil der radialen Abmessung des Tellers 24. Fig. 2
zeigt, dass die Stützwalzen 40 und 41 in grösseren Gruppen
44 und in kleineren Gruppen 45 angeordnet sind, und dass jeweils die zusammen eine Gruppe bildenden Stützwalzen 40 und
41 zwei parallele Reihen bilden, die dicht nebeneinander
radial zum Teller 24 verlaufen. Dabei sind die Stützwalzen
40 der einen Reihe in bezug auf die Stützwalzen 41 der andern Reihe in radialer Richtung des Tellers 24 versetzt. Das
Mass dieses Versatzes beträgt weniger als die achsiale Länge
einer einzelnen Stützwalze 40 bzw. 41, so dass die Endpartien der einander benachbarten Stützwalzen 40 und 41 der einen und der andern Reihe sich überlappen, wie deutlich in
Fig. 2 zu sehen ist. Durch diese Anordnung ist erreicht,
dass die Stützwalzen 40 der einen Reihe die freien Abstände zwischen den Stützwalzen 41 der anderen Reihe überbrücken
und umgekehrt.

Gemäss den Fig. 3 bis 5 sind die Enden der Achsen 42 und 43,
auf denen die Stützwalzen 40 und 41 frei drehbar gelagert
sind, in Ausnehmungen von Lagerwangen 46 abgestützt. Die jeweils zu einer grösseren Gruppe 44 der Stützwalzen gehörenden Lagerwangen 46 sind in einer im Querschnitt U-förmigen
Profilschiene 47 angeordnet, wobei zwischen den in Längsrichtung der Profilschiene aufeinanderfolgenden Lagerwangen
46 Abstandhalter 48, 49 und 50 eingeschaltet sind, die ebenfalls U-förmigen Querschnitt aufweisen. Die Profilschiene
47 hält die die betreffende Gruppe 44 bildenden Stützwalzen
40 und 41 sowie die zugeordneten Lagerwangen 46 und Abstandhalter 48, 49 und 50 zu einer Baueinheit zusammen, die mittels Schrauben 51 und 52 auf dem Teller 24 befestigt ist. In
völlig analoger Weise sind auch die jeweils eine kleinere
Gruppe 45 bildenden Stützwalzen 40 und 41 an einer gemeinsamen Profilschiene 53 (Fig. 2) angeordnet und mit dieser zu
einer Baueinheit vereinigt, die mittels Schrauben 54 und 55
auf dem Teller 24 befestigt ist. Gemäss Fig. 2 wechseln die
grösseren Gruppen 44 und die kleineren Gruppen 45 der Stützwalzen 40 und 41 in Umfangsrichtung des Tellers 24 miteinander ab, und die vom Zentrum 56 des Tellers 24 abgewandten Enden der sämtlichen Gruppen zugeordneten Profilschienen 47
und 53 haben die gleiche Entfernung vom Zentrum 56. Nahe
bei der Peripherie des Tellers 24 verläuft eine von der Oberseite des Tellers aufkragende Randleiste 57 (Fig. 2 und 3),
die auf nicht dargestellte Weise an den äusseren Enden der
Profilschienen 47 und 53 befestigt ist. Die freie obere
Fläche 58 der Randleiste 57 liegt in einer gedachten Horizontalebene, in welcher auch die jeweils obersten Mantellinien sämtlicher Stützwalzen 40 und 41 liegen.

Die bereits erwähnte Wickeltrommel 34 weist gemäss den Fig.
2 und 3 einen horizontalen, scheibenförmigen Boden 60 und einen von der Peripherie desselben aufkragenden Ringkörper
61 auf. Die äussere Umfangsfläche 62 des Ringkörpers 61 ist
mit zwei parallelen Umfangsnuten 63 versehen, in welchen
sich eine Mehrzahl von Stützrollen 64 befinden. Je eine
Stützrolle 64 in der unteren und in der oberen Umfangsnut
63 ist auf einer gemeinsamen, vertikalen Achse 65 frei drehbar gelagert, wie in Fig. 3 deutlich zu sehen ist. Die
Stützrollen 64 ragen über die äussere Umfangsfläche 62 des
Ringkörpers 61 hinaus und folgen in Umfangsrichtung des
Ringkörpers derart dicht aufeinander, dass sie imstande sind,
eine Berührung der jeweils innersten Windung des die Wickeltrommel 34 umgebenden Filmwickels mit der Umfangsfläche des
Ringkörpers 61 zu verhüten. Somit wird die innerste Windung
des Filmwickels ausschliesslich auf den drehbaren Stützrollen
64 reibungsarm radial abgestützt. Ein nach aussen radial abstehender Umfangsrand 66 des Ringkörpers 61 dient zum Niederhalten der paar inneren Windungen des Filmwickels auf den
der Wickeltrommel 34 benachbarten horizontalen Stützwalzen
40 des Tellers 24.

Die Wickeltrommel 34 ist unabhängig vom Teller 24 und befindet sich über einer zentralen Oeffnung 70 (Fig. 3) des
Tellers. Während der Teller 24 unmittelbar auf der Nabe 26
abgestützt ist, wie Fig. 3 zeigt, ist der Boden 60 der Wickeltrommel 34 gemäss Fig. 6 auf einer Flanschscheibe 71 einer
zentralen Achse 72 abgestützt, die innerhalb der Nabe 26 koaxial angeordnet ist. Die Nabe 26 ihrerseits ist mittels eines doppelreihigen Kugellagers 73 drehbar auf einem stationären Tragkörper 74 gelagert, der über das Getriebegehäuse
27 (Fig. 1) auf dem Ständer 23 abgestützt ist. Der Tragkörper 74 weist eine zentrale Ausnehmung 75 auf, in welcher eine teils hohle Welle 76 mit Hilfe von zwei Kugellagern 77
und 78 drehbar gelagert ist. Das untere Ende dieser Welle
76 steht über das im Getriebegehäuse 27 angeordnete Winkelgetriebe mit dem Antriebsmotor 28 (Fig. 1) in Verbindung. Die
bereits erwähnte Achse 72, welche die Wickeltrommel 34 trägt, greift koaxial in den oben offenen Hohlraum der Welle 76
ein, wobei die untere Endpartie der Achse 72 mittels eines
Nadellagers 79 und eines Achsialdrucklagers 80 an der Welle
76 abgestützt ist. Unmittelbar unterhalb der Flanschscheibe
71 ist ein Zahnriemenrad 81 mit Hilfe von zwei Kugellagern
82 und 83 drehbar auf der Achse 72 gelagert. Das Zahnriemenrad 81 ist mit einer Büchse 84 fest verbunden, welche die
Achse 72 umgibt und in den Hohlraum der Welle 76 eingreift.
Zwischen der äusseren Umfangsfläche der Büchse 84 und der
inneren Umfangsfläche der hohlen Partie der Welle 76 sind
Freilauf-Gesperrekörper 85 eingebettet, die eine Kupplung
der Welle 76 mit der Büchse 84 nur in einem Drehsinn bewirken, nicht aber im entgegengesetzten Drehsinn. Derartige
Freilaufkupplungen sind allgemein bekannt und im Handel erhältlich, z.B. von der Firma Torrington Company, so dass
hier nicht näher darauf eingetreten werden muss.

Zwischen einer äusseren Umfangsfläche 90 des Tragkörpers 74
und einer inneren Umfangsfläche 91 der Nabe 26 ist ein spezieller Kupplungsring 93 angeordnet, der die in den Fig. 6 und 7
ersichtliche Form hat. Dieser Kupplungsring 93 ist an einer Stelle seines Umfanges mit einem durchgehenden Schlitz
94 versehen, derart dass am Kupplungsring zwei sich in Umfangsrichtung überlappende Endpartien 93A und 93B vorhanden
sind. Jede der beiden Endpartien 93A und 93B ist mit einer
Bohrung 95 bzw. 96 versehen. An einer dem Schlitz 94 diametral gegenüberliegenden Stelle weist der Kupplungsring 93
eine weitere Bohrung 97 auf. Gemäss Fig. 6 ist an der Unterseite des Bodens 60 der Wickeltrommel 34 ein Tragzapfen 100
mittels einer Schraube 101 befestigt. Ein im Durchmesser verringerter Teil 102 des Tragzapfens 100 greift durch die
Bohrung 97 des Kupplungsringes 93 hindurch, und ein Federring 103 hält den Kupplungsring am Tragzapfen 100 fest.
Durch jede der Bohrungen 95 und 96 des Kupplungsringes 93
ist der zylindrische Schaft einer Schraube 105 bzw. 106 hindurchgeführt, die in ein gemeinsames Drehstück 107 eingeschraubt ist. Letzteres ist durch eine Schraube 108 mit einem Drehzylinder 109 fest verbunden, der in einer an der
Unterseite des Bodens 60 der Wickeltrommel 34 befestigten
Büchse 110 drehbar gelagert ist. Die obere achsiale Endpartie des Drehzylinders 109 ragt durch eine entsprechende Durchbrechung des Bodens 60 hindurch und weist eine frei zugängliche, nicht runde Ausnehmung 111 (vgl. auch Fig. 2) zum
Einstecken eines nicht dargestellten Schlüssels auf, mit
dessen Hilfe der Drehzylinder 109 und das Drehstück 107 in
der Büchse 110 gedreht werden können, um den Kupplungsring
93 zu spreizen oder im Durchmesser zu verkleinern. Durch
Spreizen des Kupplungsringes 93 wird dessen Aussenumfang an
die innere Umfangsfläche 92 der Nabe 26 angedrückt, wobei die
Wickeltrommel 34 mit der Nabe 26 und dem Teller 24 gekuppelt
wird. Beim Verkleinern des Durchmessers des Kupplungsringes
93 hingegen wird dessen Innenumfang an die äussere Umfangsfläche 90 des stationären Tragkörpers 74 angedrückt, wodurch die Wickeltrommel 34 gegen Drehung gesperrt wird. Zwischen dem Drehstück 107 und der Büchse 110 sind Tellerfedern
112 angeordnet, welche imstande sind, die aus dem Drehzylinder 109 und dem Drehstück 107 bestehende Baueinheit durch
Reibung in der jeweils eingestellten Drehlage bezüglich der
Büchse 110 festzuhalten, so dass die Kupplung der Wickeltrommel 34 mit der Nabe 26 oder mit dem Tragkörper 74 aufrechterhalten bleibt.

Gemäss Fig. 2 weist der Ringkörper 61 der Wickeltrommel 34
an einer Stelle seines Umfanges eine schlitzartige Unterbrechung 120 auf, durch welche hindurch die innerste Windung des Filmwickels 25 in den Innenraum der Wickeltrommel
34 abgezogen werden kann. Am Ort der Unterbrechung 120 befindet sich eine um eine vertikale Achse 121 drehbare Umlenkrolle 122 für den in die Wickeltrommel 34 eintretenden
Filmstreifenteil. Innerhalb der Wickeltrommel 34 sind mehrere weitere Umlenk- und Führungsrollen 123 bis 126 für den
Filmstreifen 22 frei drehbar auf zugehörigen vertikalen
Achsen 127 bis 130 gelagert, die am Boden 60 der Wickeltrommel befestigt sind. Zum Vorschub des Filmstreifens 22 ist ferner eine Zahnrolle 131 vorhanden, die auf einer vertikalen Welle 132 sitzt. Letztere ist gemäss Fig. 6 mittels Kugellagern 133, von denen nur eines dargestellt ist, in einer
am Boden 60 der Wickeltrommel 34 befestigten Lagerbüchse 134
drehbar gelagert. Das untere Ende der Welle 132 trägt ein
Zahnriemenrad 135, das über einen in Fig. 6 lediglich schematisch angedeuteten Zahnriemen 136 unterhalb des Bodens 60
der Wickeltrommel 34 mit dem bereits erwähnten Zahnriemenrad 81 verbunden ist. Der Zahnrolle 131 ist eine an einem
Schwenkarm 137 drehbar gelagerte Andrückrolle 138 zugeordnet (Fig. 2). Schliesslich sind ebenfalls innerhalb der
Wickeltrommel 34 noch eine um eine schiefe Achse 139 drehbare Umlenkrolle 140 und eine dieser beigeordnete kegelförmige Führungsrolle 141 mit einer vertikalen Achse 142 vorhanden. Die zwei letztgenannten Rollen 140 und 141 erlauben,
den Filmstreifen knickfrei über den Ringkörper 61 der Wickeltrommel 34 hinweg etwa radial zum Teller 24 wegzuführen. In
Fig. 2 ist der Lauf des Filmstreifens 22 über die verschiedenen Rollen im Innern der Wickeltrommel 34 durch strichpunktierte Linien und Pfeile 143 und 144 angedeutet.

In Fig. 1 ist dargestellt, wie der aus der Wickeltrommel 34
weggeführte Filmstreifen 22 zum Filmprojektor 20 geleitet
wird. An einem nach oben verlängerten Teil 150 des Ständers
23 sind einige Führungs- und Umlenkrollen 151 bis 154 mit
horizontalen Achsen drehbar angeordnet. Ferner ist an dem
Ständerteil 150 ein Wagen oder Schlitten 155 in vertikaler
Richtung bewegbar geführt. An diesem Wagen oder Schlitten
155 ist eine weitere Umlenkrolle 156 mit horizontaler Achse
drehbar angeordnet. Unter dem Einfluss der Schwerkraft oder
einer nicht dargestellten Feder ist der Wagen oder Schlitten
155 bestrebt, sich nach unten zu bewegen, wobei der zwischen
der Zahnrolle 131 in der Wickeltrommel 34 und einer oberen
Zahnrolle 157 des Projektors 20 liegende Teil des Filmstreifens 22 mit einer vorgegebenen Zugkraft gestrafft wird. Am
Ständerteil 150 sind ferner zwei elektrische Endschalter 158

und 159 angeordnet, welche durch den Wagen oder Schlitten
150 betätigbar sind, wenn dieser das untere bzw. obere Ende
seiner Bewegungsbahn erreicht. Die beiden Endschalter 158
und 159 stehen mit einer elektrischen Steuervorrichtung 160
in Verbindung, die zum Regeln der Drehzahl des Motors 28 zum
Antrieb der Zahnrolle 131 in der Wickeltrommel 34 dient.

Nach dem Verlassen der unteren Zahnrolle 161 und einer Umlenkrolle 162 des Filmprojektors 20 läuft der Filmstreifen
22 über einige weitere Führungs- und Umlenkrollen 163, 164
und 165 zum Teller 24 zurück, wo er aussen auf den Filmwickel 25 aufgewickelt wird. Um die Windungen des Filmwickels 25 in Anlage auf den Stützwalzen 40 und 41 des Tellers 24 niederzuhalten, ist an der Stelle, wo der vom Filmprojektor 20 zurückkommende Teil des Filmstreifens 22 auf
den Filmwickel 25 aufläuft, eine Niederhaltewalze 170 (Fig.
1 und 10) angeordnet. Diese Niederhaltewalze 170 ist auf
einer Achse 171 drehbar gelagert, die etwa radial zum Teller 24 verlaufend an einem Schwenkarm 172 befestigt ist.
Letzterer ist unter dem Einfluss der Schwerkraft schwenkbar
an einer horizontalen Traverse 173 gelagert, die ihrerseits
mittels eines Halters 174 am Ständerteil 150 befestigt ist.
Zum Anpassen der Lage der Niederhaltewalze 170 an den Durchmesser des Filmwickels 25 ist der Schwenkarm 172 längs der
Traverse 173 verschiebbar.

Dem zweiten Motor 29, welcher zum Antrieb der Nabe 26 und
damit des Tellers 24 dient, ist ebenfalls eine elektrische
Steuervorrichtung 175 zugeordnet, mit deren Hilfe die Drehzahl des Motors 29 regulierbar ist. Für die Filmprojektion
wird die Drehzahl des Motors 29 zweckmässig derart eingestellt, dass die Winkelgeschwindigkeit des Tellers 24 in
einem Bereich liegt, der durch die Winkelgeschwindigkeiten
der äussersten und der innersten Windung des Filmwickels 25
begrenzt ist.

An einer Stelle, die der Niederhaltewalze 170 etwa diametral
gegenüberliegt, befindet sich noch eine in den Fig. 1, 8 und
9 dargestellte Vorrichtung 180 zum Beeinflussen der Kompaktheit des Filmwickels 25. Diese Vorrichtung 180 weist eine am
Ständer 23 befestigte Trägerplatte 181 auf, an welcher ein
aus drei horizontalen Stäben 182 und einer Endplatte 183 bestehender Ausleger befestigt ist, der sich etwa radial zum
Teller 24 vom äussersten Umfang des Tellers gegen die Wickeltrommel 34 erstreckt. Parallel zu den Stäben 182 verläuft
eine Welle 184, die in den Platten 181 und 183 drehbar gelagert ist. Das von der Wickeltrommel 34 abgewandte Ende
der Welle 184 trägt ein Zahnriemenrad 185, das über einen
Zahnriemen 186 mit einem weiteren Zahnriemenrad 187 in Verbindung steht. Mittels eines Winkelgetriebes 188 ist das
Zahnriemenrad 187 mit einem Reibrad 189 verbunden, das gegen
den äusseren Umfang des Tellers 24 anliegt, so dass beim
Drehen des Tellers 24 das Reibrad 189 angetrieben wird. Die
Welle 184 durchsetzt ein Zahnriemenrad 190, das entlang der
Welle 184 verschiebbar und zugleich mit der Welle 184 drehungsverbunden ist. Das Zahnriemenrad 190 befindet sich zwischen zwei auf der Welle 184 schwenkbar gelagerten Laschen
191 und 192, die durch einen Steg 193 miteinander verbunden
sind. An den Laschen 191 und 192 ist ferner eine zu der Welle 184 parallele Achse 194 befestigt, auf der ein weiteres
Zahnriemenrad 195 und eine mit letzterem drehverbundene
Reibrolle 196 drehbar gelagert sind. Mittels eines Zahnriemens 197 sind die beiden Zahnriemenräder 190 und 195 miteinander verbunden. Die eine Lasche 191 weist eine gegen
oben abgewinkelte Verlängerung 198 auf, an der ein Gewicht
199 befestigt ist. Letzteres bewirkt, dass die Laschen 191
und 192 unter dem Einfluss der Schwerkraft bestrebt sind,
gegen unten zu schwenken. Für die Projektion des Filmes 22
wird die aus den Teilen 190 bis 199 bestehende Baueinheit
längs der Welle 184 derart eingestellt, dass die Reibrolle
196 auf den äussersten paar Windungen des Filmwickels 25 aufliegt.

Die Gebrauchs- und Wirkungsweise der dargestellten und beschriebenen Einrichtung für die Endlosprojektion eines Filmes ist kurz wie folgt:

Zuerst muss der Filmwickel 25 auf dem Teller 24 gebildet
werden. Hierzu wird zunächst bei stillstehendem Teller 24
die Wickeltrommel 34 mittels des Kupplungsringes 93 (Fig. 6)
mit der Nabe 26 gekuppelt, indem der Drehzylinder 109 und
das damit verbundene Drehstück 107 mit einem in die Ausnehmung 111 eingesteckten (nicht gezeichneten) Schlüssel entgegen dem Drehsinn des Uhrzeigers gedreht werden, was eine
Spreizung des Kupplungsringes 93 zur Folge hat. Nachher wird
das voranlaufende Ende des Filmes 22 durch die Unterbrechung
120 im Ringkörper 61 der Wickeltrommel 34 von aussen gemäss
dem Pfeil 143 in Fig. 2 hindurchgeführt und vorübergehend
im Innern der Wickeltrommel 34 auf beliebige Weise befestigt.
Anschliessend setzt man den Motor 29 in Betrieb, so dass der
Teller 24 und die Wickeltrommel 34 zusammen entgegen dem
Drehsinn des Uhrzeigers (in Fig. 2) rotieren. Dabei wird
der Film 22 um den Ringkörper 61 der Wickeltrommel 34 herum
spiralartig aufgewickelt und damit der Filmwickel 25 gebildet.

Für die Endlosprojektion des Filmes 22 wird die Wickeltrommel 34 von der Nabe 26 losgekuppelt und mit dem stationären
Tragteil 74 gekuppelt, indem mit Hilfe des bereits erwähnten
Schlüssels der Drehzylinder 109 und das Drehstück 107 im
Drehsinn des Uhrzeigers gedreht werden, was eine Verkleinerung des Durchmessers des Kupplungsringes 93 zur Folge
hat. Das voranlaufende Ende des Filmes 22 wird nachher gemäss den strichpunktierten Linien in Fig. 2 um die Rollen
122 und 123, um die Zahnrolle 131 und um die Rollen 124, 125,
126 und 140 gelegt. Dabei ist es möglich, den Filmstreifen
22 gemäss den Pfeilen 143 und 144 von der innersten Windung
des Filmwickels 25 abzuziehen, wenn gleichzeitig der Teller
24 entgegen dem Drehsinn des Uhrzeigers gedreht wird. Die
Zahnrolle 131 kann dabei frei mitlaufen, da die Freilauf-

kupplung 85 (Fig. 6) für die betreffende Drehrichtung die Verbindung zur Welle 76 selbsttätig unterbricht. Das voranlaufende Ende des Filmes 22 wird nachher weiter über die Rollen 151, 152, 156 und 154 zum Projektor 20 geführt, wonach der Film in üblicher Weise in den Projektor 20 eingefädelt werden kann. Schliesslich führt man das voranlaufende Ende des Filmes 22 über die Rollen 162 bis 165 zum Filmwickel 25 zurück, wo es mit dem nachlaufenden Ende des Filmes gespleisst wird.

Zur Vorführung des Filmes 22 werden der Projektor 20 und die beiden Motoren 28 und 29 gleichzeitig in Betrieb gesetzt. Der Motor 28 treibt über die Welle 76 (Fig. 6) und die nunmehr als Drehverbindung wirksame Freilaufkupplung 85 die Büchse 84 und das mit derselben verbundene Zahnriemenrad 81 an, wobei mittels des Zahnriemens 136 das Zahnriemenrad 135 und die Welle 132 wie auch die Zahnrolle 131 angetrieben werden, und zwar entgegen dem Drehsinn des Uhrzeigers in Fig. 2. Die rotierende Zahnrolle 131 zieht den Filmstreifen durch die Unterbrechung 120 im Ringkörper 61 der Wickeltrommel 34 hindurch von dem Filmwickel 25 ab. Mittels der elektrischen Steuervorrichtung 160 und nötigenfalls auch der beiden Endschalter 158 und 159 wird die Drehzahl des Motors 28 derart geregelt, dass der durch die Zahnrolle 131 bewirkte Vorschub des Filmstreifens mit dem Vorschub des Filmes durch den Projektor 20 übereinstimmt. Bei dem beschriebenen Abziehen des Filmes 22 von dem Filmwickel 25 läuft die innerste Windung des Filmwickels reibungsarm über die Stützrollen 64 am Ringkörper 34, so dass die Entstehung von Kratzern und Schrammen infolge Reibung praktisch ausgeschlossen ist. Zusammen mit der innersten Windung drehen sich auch die übrigen Windungen des Filmwickels in Fig. 2 entgegen dem Drehsinn des Uhrzeigers, so dass also der ganze Filmwickel in Drehung ist. Diese Drehung des Filmwickels wird durch die im gleichen Drehsinn erfolgende Rotation des Tellers 24 begünstigt. Hierdurch wird vermieden, dass der Filmstreifen übermässig auf Zug beansprucht wird.

Die Vorschubgeschwindigkeit des Filmes ist in allen Windungen des Filmwickels die gleiche. Da aber der Durchmesser der Windungen des Filmwickels von innen nach aussen zunimmt, wird die Winkelgeschwindigkeit der sich drehenden Windungen von innen nach aussen kleiner. Zweckmässig wird nun mittels der elektrischen Steuervorrichtung 175 die Drehzahl des Motors 29 derart eingestellt, dass die Winkelgeschwindigkeit des Tellers 24 etwa gleich dem arithmetischen Mittelwert der Winkelgeschwindigkeiten der innersten und der äussersten Windung des Filmwickels ist. Hierdurch ergeben sich die geringstmöglichen Unterschiede zwischen den Umlaufgeschwindigkeiten der einzelnen Windungen des Filmwickels und den jeweils senkrecht darunter liegenden Partien des Tellers 24. Da der Filmwickel mittels der drehbaren Stützwalzen 40 und 41 auf dem Teller 24 abgestützt ist, brauchen keine Windungen des Filmwickels auf dem Teller 24 zu gleiten, und es tritt lediglich eine geringfügige rollende Reibung auf. Weil die achsiale Länge jeder einzelnen Stützwalze 40 bzw. 41 verglichen mit der radialen Abmessung des Filmwickels klein ist, haben jeweils die auf einer und derselben Stützwalze liegenden Windungen des Filmwickels keine nennenswerten Geschwindigkeitsunterschiede, weshalb auch die Reibung der Windungen auf den Stützwalzen relativ gering ist. Durch die beschriebene Ausbildung und Anordnung der Stützwalzen 40 und 41 wie auch durch den geschilderten Drehantrieb des Tellers 24 wird erreicht, dass der ganze Film 22 ohne Schaden zu erleiden den Filmwickel durchlaufen kann, wobei mittels der Zahnrolle 131 nur eine relativ geringe Zugkraft für den Vorschub des Filmstreifens aufgebracht werden muss.

Die unter dem Einfluss der Schwerkraft auf den äussersten paar Windungen des Filmwickels 25 aufliegende Niederhaltewalze 170 sorgt dafür, dass der vom Projektor 20 zurückkommende Film in Anlage an den Stützwalzen 40 und 41 des Tellers 24 gelangt und die Kanten der Windungen des Filmwickels bündig bleiben.

Bei der Drehung des Tellers 24 wird mittels des Reibrades 189, des Getriebes 188, der Zahnriemenräder 187 und 185 und des Zahnriemens 186 auch die Welle 184 der Vorrichtung 180 angetrieben. Durch die Welle 184 wird das Zahnriemenrad 190 in Drehung versetzt, dessen Bewegung mittels des Zahnriemens 197 auch auf das Zahnriemenrad 195 und die Reibrolle 196 übertragen wird. Die Reibrolle 196 liegt unter dem Einfluss der Schwerkraft auf den paar äussersten Windungen des Filmwickels 25 auf und hat eine Umfangsgeschwindigkeit, die ein wenig kleiner ist als die Umlaufgeschwindigkeit der äussersten Windung des Filmwickels. Somit übt die Reibrolle 196 eine vorbestimmte Bremswirkung auf die äusserste Windung des Filmwickels aus, wodurch erreicht wird, dass sämtliche Windungen des Filmwickels konstant mit einem geringen Druck aneinander anliegen. Diese Massnahme verhindert die Entstehung eines zu lockeren Filmwickels, bei welchem gegebenenfalls unnötig grosse Unterschiede der Umlaufgeschwindigkeiten der einander benachbarten Windungen auftreten könnten.

Zusammenfassend ist festzuhalten, dass während der Endlosprojektion des Filmes 20 der die Wickeltrommel 34 umgebende und auf dem Teller 24 axial abgestützte Filmwickel 25 fortwährend innen abgebaut und aussen wieder aufgebaut wird, wobei Innen- und Aussendurchmesser des Filmwickels je gleich bleiben.

Zum Erstellen des Filmwickels 25 vor Beginn der Projektion und zum Abziehen des Filmwickels nach beendeter Projektion lassen sich die Niederhaltewalze 170 und die Reibrolle 196 nach oben in unwirksame Stellungen schwenken, bei denen sie vom Filmwickel abgehoben sind.

C.E.T. Construction Engineering
and Technology Limited

Patentanv
EDUARD K. B/ 0155998
Dipl. Ph)
Sattlerstr. 1, D-8011 Höhe
Tel.(08102)4108     Telex: ....

- 17 -

Patentansprüche

1. Einrichtung für die Endlosprojektion eines kinematographischen Filmes, mit einem drehbar gelagerten Teller zum
achsialen Abstützen eines piralartigen Filmwickels, mit
einer zum Teller koaxialen Wickeltrommel mit einem Ringkörper zum radialen Abstützen der innersten Windung des
Filmwickels, mit ersten Führungsrollen zum fortlaufenden
Abführen des Filmes von der innersten Windung des Filmwickels zwecks Zulieferung des Filmes zu einem Filmprojektor und mit weiteren Führungsrollen zum Zuleiten des vom
Filmprojektor zurückkommenden Filmes zur äussersten Windung des Filmwickels, dadurch gekennzeichnet, dass am Ringkörper (61) der Wickeltrommel (34) eine Mehrzahl von drehbaren Stützrollen (64) mit zu der Wickeltrommelachse parallelen Rotationsachsen angeordnet sind zum reibungsarmen radialen Abstützen der innersten Windung des Filmwickels (25),
dass der Teller (24) eine Mehrzahl von drehbaren Stützwalzen (40, 41) mit radial zum Teller angeordneten Rotationsachsen aufweist zum reibungsarmen achsialen Abstützen des
Filmwickels (25), dass die Wickeltrommel (34) gegen Drehung
sperrbar ist und ihr Ringkörper (61) eine Unterbrechung
(120) zum Hindurchführen der von der innersten Windung des
Filmwickels (25) abzuführenden Filmpartie aufweist, dass zumindest ein Teil der ersten Führungsrollen (122-126, 131,
140) im Innenraum der Wickeltrommel (34) angeordnet sind und
eine drehbare Transportrolle (131) zum Antreiben des Filmes
(22) aufweisen, und dass Antriebsvorrichtungen (29, 30 bzw.
27, 28) zum Drehantrieb des Tellers (24) einerseits und der
Transportrolle (131) anderseits vorhanden sind.

2. Einrichtung nach Anspruch 1, dadurch gekennzeichnet, dass die Stützwalzen (40, 41) des Tellers (24) je eine achsiale Länge aufweisen, die nur einen Bruchteil der radialen Abmessung des Tellers (24) beträgt, und dass die Stützwalzen (40, 41) des Tellers (24) in Gruppen (44, 45) angeordnet sind, in denen einander benachbarte Stützwalzen (40, 41) in radialer Richtung des Tellers (24) versetzte Lagen zueinander haben, wobei das Mass des Versatzes weniger als die achsiale Länge einer einzelnen Stützwalze (40, 41) beträgt.

3. Einrichtung nach Anspruch 2, dadurch gekennzeichnet, dass die eine Gruppe (44, 45) bildenden Stützwalzen (40, 41) des Tellers (24) in zwei parallelen Reihen angeordnet sind, die nebeneinander radial zum Teller (24) verlaufen, dass jeweils zwischen den aufeinanderfolgenden gleichachsigen Stützwalzen (40, 41) einer jeden Reihe freie Abstände vorhanden sind, die in radialer Richtung des Tellers (24) kürzer sind als die achsiale Länge der einzelnen Stützwalzen (40, 41), und dass die Stützwalzen (40) der einen Reihe jeweils die freien Abstände zwischen den Stützwalzen (41) der andern Reihe überbrücken und umgekehrt.

4. Einrichtung nach einem der Ansprüche 1 bis 3, dadurch gekennzeichnet, dass die Stützwalzen (40, 41) des Tellers (24) je eine zylindrische Umfangsfläche aufweisen und auf einer Achse (42, 43) frei drehbar gelagert sind, die in Ausnehmungen von Lagerwangen (46) abgestützt sind.

5. Einrichtung nach den Ansprüchen 3 und 4, dadurch gekennzeichnet, dass die eine Gruppe bildenden Stützwalzen (40, 41) des Tellers (24) und die zugeordneten Lagerwangen (46) in einer gemeinsamen, im Querschnitt U-förmigen Profilschiene (47, 53) angeordnet sind, die an der Oberseite des Tellers (24) radial verlaufend befestigt ist.

6. Einrichtung nach einem der Ansprüche 1 bis 5, dadurch gekennzeichnet, dass willkürlich steuerbare Kupplungsmittel (93, 105-112) vorhanden sind, um die Wickeltrommel (34) wahlweise gegen Drehung zu sperren oder mit dem Teller (24) drehfest zu verbinden, letzteres zum Zweck, den Film auf der Wickeltrommel (34) aufzuwickeln.

7. Einrichtung nach Anspruch 6, dadurch gekennzeichnet, dass die Kupplungsmittel (93, 105-112) einen mit der Wickeltrommel (34) verbundenen Kupplungsring (93) aufweisen, der zwischen einer zylindrischen Aussenfläche (90) eines ruhenden Bauteiles (74) und einer zylindrischen Innenfläche (92) einer mit dem Teller (24) verbundenen Nabe (26) angeordnet ist, dass der Kupplungsring (93) an einer Stelle seines Umfanges geschlitzt ist und zwei sich in Umfangsrichtung überlappende Endpartien (93A, 93B) aufweist, und dass an den beiden Endpartien (93A, 93B) des Kupplungsringes (93) ein an der Wickeltrommel (34) verstellbar angeordnetes Kraftübertragungsorgan (107-109) angreift, mittels welchem der Kupplungsring (93) wahlweise in seinem Durchmesser verkleinerbar oder vergrösserbar ist, um entweder an die zylindrische Aussenfläche (90) des ruhenden Bauteiles (74) oder an die zylindrische Innenfläche (92) der Nabe (26) des Tellers (24) angepresst zu werden.

8. Einrichtung nach einem der Ansprüche 1 bis 7, dadurch gekennzeichnet, dass die Drehachse des Tellers (24) vertikal verläuft und die obersten Mantellinien sämtlicher Stützwalzen (40, 41) des Tellers (24) in einer gemeinsamen gedachten Horizontalebene liegen.

9. Einrichtung nach Anspruch 8, dadurch gekennzeichnet, dass bei der äusseren Peripherie des Tellers (24) eine von der Oberseite des Tellers aufkragende Umfangsleiste (57) angeordnet ist, deren obere Stirnfläche (58) in der gleichen Horizontalebene liegt wie die obersten Mantellinien der Stützwalzen (40, 41).

10. Einrichtung nach Anspruch 8 oder 9, dadurch gekennzeichnet, dass an einem stationären Ständer (150) eine den Teller (24) übergreifende horizontale Traverse (173) angeordnet ist, die einen um eine horizontale Achse schwenkbaren Arm (172) trägt, dass am schwenkbaren Arm (172) eine Niederhaltewalze (170) drehbar gelagert ist, die eine im wensentlichen radial zur Drehachse des Tellers (24) verlaufende Achse (171) aufweist und dazu bestimmt ist, unter dem Einfluss der Schwerkraft und/oder einer Feder die äusserste Windung des Filmwickels (25) in Anlage an den Stützwalzen (40, 41) des Tellers (24) zu halten, und dass der schwenkbare Arm (172) entlang der Traverse (173) verstellbar ist.

11. Einrichtung nach einem der Ansprüche 1 bis 10, dadurch gekennzeichnet, dass an einem stationären Ständer (23, 181) ein den Teller (24) übergreifender Ausleger (182, 183; 184) befestigt ist, der einen um eine horizontale Achse schwenkbaren Arm (191-193) trägt, dass an dem schwenkbaren Arm (191-193) eine Reibrolle (196) drehbar gelagert ist, die eine im wesentlichen radial zur Drehachse des Tellers (24) verlaufende Achse (194) aufweist und dazu bestimmt ist, unter dem Einfluss der Schwerkraft und/oder einer Feder reibungsschlüssig an Kantenpartien von äussersten Windungen des Filmwickels (25) anzuliegen, um diese Windungen zu bremsen, und dass der schwenkbare Arm (191-193) entlang dem Ausleger (182, 183, 184) verstellbar ist.

12. Einrichtung nach Anspruch 11, dadurch gekennzeichnet, dass die Reibrolle (196) durch Drehmomentübertragungsorgane (185-190, 195, 197) mit dem Teller (24) in Wirkungsverbindung steht und durch die Drehbewegung des Tellers (24) antreibbar ist.

13. Einrichtung nach Anspruch 12, dadurch gekennzeichnet, dass die Drehmomentübertragungsorgane ein an der Peripherie des Tellers (24) anliegendes Reibrad (189) und eine
in der Längsrichtung des Auslegers (182, 183, 184) verlaufende, drehbare Welle (184) aufweisen, die ein mit der Reibrolle (196) verbundenes Rad (190) trägt, das längs der Welle (184) verschiebbar und mit dersleben drehungsverbunden
ist.

Fig. 1

Fig. 8

Fig. 9

Fig. 10

0155998

1/4

Fig. 2

0155998

2/4

0155998

*Fig. 3.*

*Fig. 4*

*Fig. 7*

*Fig.5*

Fig.6

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | US-A-1 631 137 (F.J. KINCADE)<br>* Seiten 2-4; Figuren 1-6 * | 1 | G 03 B  21/32 |
| Y | FR-A-1 197 500 (ETOILE-FILM)<br>* Seite 1, Spalte 2, Zeilen 40-43; Seite 2, Spalte 1; Figur 1 * | 1,2,4 | |
| Y | GB-A-1 134 814 (H. KOBAYASHI)<br>* Seite 2, Spalte 2, Zeilen 108-130; Seite 3; Figuren 1-15 * | 1,2,4 | |
| A | * Seite 3; Figuren 8-15 * | 3,6,8 | |
| A | US-A-2 740 628 (J.W. SMALL)<br>* Spalten 4,5; Figuren 6-8 * | 10,11 | RECHERCHIERTE SACHGEBIETE (Int. Cl.4) |
| | ----- | | G 03 B  21/32<br>G 11 B  15/70 |

Der vorliegende Recherchenbericht wurde für alle Patentansprüche erstellt.

| Recherchenort<br>DEN HAAG | Abschlußdatum der Recherche<br>06-06-1985 | Prüfer<br>BOEYKENS J.W. |
|---|---|---|